# EUROPEAN PATENT SPECIFICATION

(11) **EP 1 602 166 B1**
(45) Date of publication and mention of the grant of the patent: **20.12.2006**
(21) Application number: 04717086.5
(22) Date of filing: 04.03.2004
(51) Int. Cl.: H02M 1/00

(54) **TRANSFERRING ELECTRIC POWER TO A POWER CONSUMER**
STROMÜBERTRAGUNG ZU EINEM VERBRAUCHER
TRANSFERT D'ENERGIE ELECTRIQUE A UN APPAREIL CONSOMMANT CETTE ENERGIE

(30) Priority: 13.03.2003 GB 0305783
(43) Date of publication of application: 07.12.2005
(73) Proprietor: Bombardier Transportation GmbH, 10785 Berlin (DE)
(72) Inventor: HILPERT, Gerald, 79787 Lauchringen (DE); REICHELT, Reinhard, 79790 Küssaberg (DE)
(74) Representative: Brunotte, Joachim Wilhelm Eberhard
(86) International application number: PCT/EP2004/002209
(87) International publication number: WO 2004/082109

(56) References cited:
- FR-A- 1 369 202
- GB-A- 2 145 592
- US-A- 2 933 652
- US-A- 4 401 942
- MENDIS S ET AL: "Overcurrent protection of capacitors applied on industrial distribution systems" PROCEEDINGS OF THE INDUSTRY APPLICATIONS SOCIETY ANNUAL MEETING. DEARBORN, SEPT. 28 - OCT. 1, 1991, NEW YORK, IEEE, US, vol. VOL. 2, 28 September 1991 (1991-09-28), pages 1788-1794, XP010056146 ISBN: 0-7803-0453-5

## Description

The present invention relates to an arrangement for transferring electric power from a power source to an electric power consumer, in particular to a driving motor of a railroad vehicle.

The arrangement comprises an input side for connecting the arrangement to the power source (in particular with an input current rectifier for rectifying an alternating current from the power source); a direct current intermediate circuit, wherein the intermediate circuit comprises a first and a second direct current connection line, at least one of the first and the second direct current connection lines being connected to the input side; and a current converter for inverting a direct current and for delivering alternating current power to the power consumer. The current converter is connected to the first and to the second direct current connection line. At least one capacitor is provided in the intermediate circuit. The capacitor has two opposite poles, wherein a first pole is connected to the first direct current connection line and wherein the second pole is connected to the second direct current connection line.

The term "power source" covers any electric device or network that is adapted to deliver electric power. In particular, means for connecting the arrangement to a current network, for example to an alternating current network, may be provided. The means are connected to the input side of the arrangement, in particular to an alternating current side of the input current rectifier.

Especially when the power consumer is a high power consumer, such as a driving motor of a railroad vehicle, the electric energy stored in the capacitor is high. In case of a defect in the arrangement (or in the arrangement including any electrically connected parts), an immediate and fast discharge of the capacitor might occur and result in mechanical damages. The term "defect" includes internal short circuits in the arrangement and external short circuits at electrically connected parts. In particular, a pair of semiconductor elements of the current converter might become defective. The two semiconductors of the pair are connected in series to each other and form a link between the first and the second direct current connection line. Normally, only one of the two semiconductors is carrying a current from the power source to the power consumer at a time. In case of a defect, both semiconductor elements are conductive at the same time and, therefore, the pair forms a short circuit. Although such a defect is rare, it is necessary to protect the arrangement from damages, since there is the potential of a substantial destruction.

It has been proposed to provide a device, which is adapted to limit the current in case of such an immediate discharge. However, the costs for such a device are high. Further, the electrical resistance of such a device results in substantial electrical losses. Therefore, it is practice in railway traction vehicles to actively cool the device by forced circulation of cooling liquid. As a consequence, additional space is required and costs rise.

Further, it has been proposed to interrupt an electric line of the intermediate circuit, using an electronic valve when the defect occurs. But so far, practical attempts to realize a corresponding device have failed, due to insufficient switching properties of the electronic valve in the field of high power transfer arrangements.

GB 2 145 592 A discloses a motor control apparatus for a motor having a chopper for regulating the motor current and a filter capacitor is provided with a programmed microprocessor for controlling the operation of the chopper. The capacitor bank smooths out voltage changes caused by the chopper. Fuses are connected in series to the capacitors.

FR 1 369 202 discloses a capacitor protective system for high voltage DC energy storage capacitor banks. The system comprises a plurality of capacitors connected in parallel across a pair of line conductors, the plurality of capacitors are adapted to be charged to a voltage of about 5-20 kV and to store at least 5,000 Joules of electrical energy, and a fuse associated with each capacitor comprising an enclosed elongated tubular housing having an axial bore and a metal wire passing therethrough, the fuse operating by failure of the capacitor associated therewith and resulting in discharge therein of the stored electrical energy, the wire in the operation of the fuse exploding and interrupting the current from such discharge, so that the capacitor is disconnected from the remaining capacitors before it is ruptured by such discharge

It is an object of the present invention to provide an arrangement of the type indicated above which prevents mechanical damages in case of a defect. The costs for adapting the arrangement and/or the additional costs for providing any means that protect from damages shall be low. Furthermore, space and investment costs shall be saved.

The arrangement according to the present invention is defined in the attached claim 1. Embodiments of the invention are defined in the dependent claims.

It is preferred that the fuse is adapted and/or chosen to melt or bum through and thereby to interrupt the connection between the capacitor and at least one of the direct current connection lines, if the time-integral of the square of a current carried by at least a part of the connection exceeds a threshold value. Further, it is preferred that the threshold value corresponds to a current which may appear only in case of an immediate discharge of the capacitor due to an electric short circuit in the arrangement or in the arrangement including any electrically connected parts.

In particular, the arrangement is adapted to transferring electric power from a current network to a driving motor of a railroad vehicle, wherein means for connecting the arrangement to the current network are provided and wherein the means are connected to the input side of the arrangement.

The described way of using the fuse (connecting the first and second direct current connection lines via the capacitor) has the advantage that the arrangement (including all other parts or elements in the intermediate circuit) and any means or device, which is electrically connected to the arrangement, are protected. Further, a fuse usually comprises a very small electric resistance. Thus, the electric losses during the operation of the arrangement are small. Furthermore, since the charging and discharging currents into and from the capacitor are usually much smaller than the current carried by the direct current connection lines, a threshold value of the fuse may be chosen which corresponds to currents well above the typical charging and discharging currents. Due to a smaller DC-resistance of the fuse, this reduces the electric losses even further.

Compared to the device described above, which limits the current to or from the capacitor, a cooling circuit can be avoided. Therefore, the required space is smaller and the arrangement becomes more easily accessible.

In case of a plurality of capacitors in the intermediate circuit, which are arranged in parallel to each other, it is preferred to provide at least two of the fuses, wherein each of these fuses carries the charging and discharging currents of only one of the capacitors. In this case, the electric losses caused by the fuses are even smaller. Another advantage of this arrangement is that the other capacitor or capacitors is/are protected in case of an internal defect of one of the capacitors.

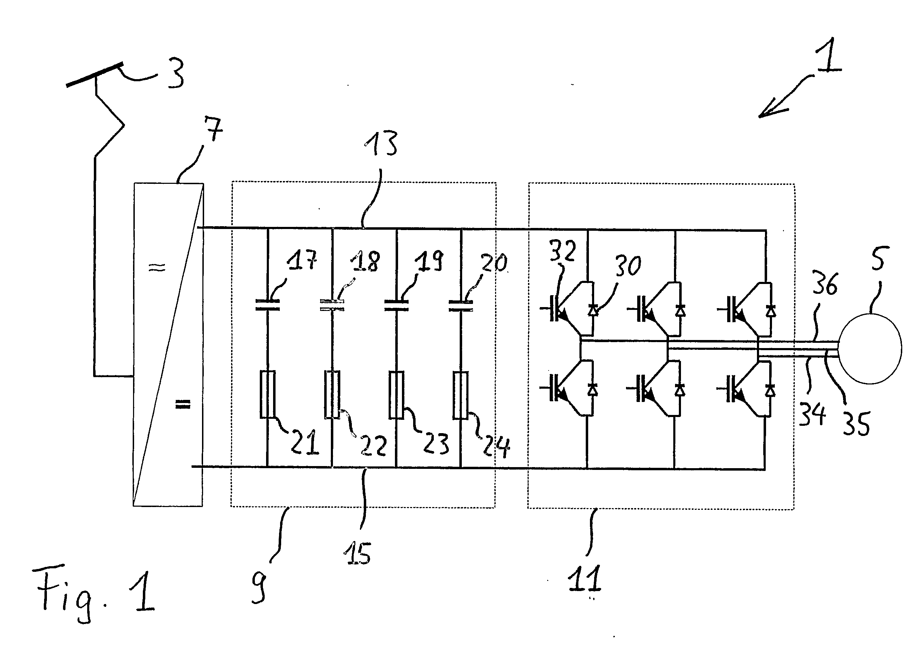

In the following, preferred embodiments of the present invention are described by way of example and by reference to the accompanied drawing. The only figure of the drawing, Fig. 1, schematically shows
an arrangement having four capacitors which are connected in parallel to each other within the intermediate circuit.

The arrangement 1 of Fig. 1 comprises an AC/DC rectifier 7, an AC side of which is connected to means 3 for connecting the arrangement 1 to a single-phase alternating current railroad power network. The means 3 may comprise a pantograph. Further, the arrangement 1 comprises an intermediate circuit 9 having two direct current connection lines 13, 15. These lines 13, 15 connect a DC side of the rectifier 7 with a DC/AC current converter 11.

Four capacitors 17 to 20 are arranged in parallel to each other. Each capacitor is connected in series to a fuse 21 to 24, so that each series connects the direct current connection lines 13, 15.

The current converter 11 may be constructed as known from the prior art. For example, it comprises six electronic switches (one of which is denoted with the reference numeral 32). A diode 30 is connected anti-parallel to each of the six electronic switches 32. combinations. Each two of the electronic switches 32 are connected in series and the series connection is connected at both sides to one of the direct current connection lines 13, 15. Further, each of the three series connections is connected to one phase of a three-phase driving motor 5 of a railroad vehicle. The electronic switches 32 are controlled by an additional device (not shown in Fig. 1).

In a preferred embodiment, the fuses 21 to 24 are semiconductor fuses, i.e. fuses that are designed to protect a power semiconductor element from damage due to electric overload. Semiconductor fuses (sometimes referred to as "rectifier fuses" or "ultra fast fuses") comprise a very short clearing time in case of an overload. Thus, the electric connection is interrupted before the current can reach its maximum. Further, semiconductor fuses that are designed for high power applications can reliably protect circuit elements at high surrounding temperatures (e.g. 50° C and more) which usually occur due to dissipation of electric energy.

However, in the arrangement of the present invention the fuses are not used to protect semiconductor elements in the first instance. Rather, they protect the arrangement, if (for example) semiconductor elements are defect already and cause a short circuit.

For example, the fuses 21 to 24 comprise a I²t (clearing time-integral of the square of the current carried by the fuse) value in the range of 40 to 80 kA²s, in particular of 50 to 70 kA²s at an average intermediate circuit voltage in the range of 2.7 to 3.3 kV, in particular of 2.9 to 3.1 kV. Such a fuse is extremely fast acting, if a short circuit situation occurs in which a capacitor may be charged at a voltage of typically up to 2.8 kV.

A type of fuses 21 to 24 is used, which is designed to clear at a short circuit voltage in the range of 1.8 kV to 2.2 kV. Although a higher capacitor voltage might occur (see example of the preceding paragraph with intermediate circuit voltages higher than 2.7 kV) this is sufficient, since the normal charging and discharging currents as well as the voltage at the fuse are substantially lower in normal operation compared to the short circuit situation. This allows for smaller and cheaper fuses and, therefore, saves space and investment costs.

The capacitance of each capacitor is for example in the range of 2 to 2.4 mF, in particular 2.1 to 2.3 mF.

The fuses 21 to 24 might be arranged below the capacitors in order to provide good accessibility to the capacitors, wherein the other components of the intermediate circuit are also arranged below the capacitors. Therefore, electric connection links between each of the fuses 21 to 24 and the respective capacitor are needed. In a preferred embodiment, the total inductance of each of the fuses 21 to 24 including the respective electric connection link between the fuse 21 to 24 and the capacitor is lower than 100 nH, in particular lower than 85 nH, in order to limit the adverse effects of the parasitic inductance.

In a further preferred embodiment, the fuses 21 to 24 are provided with at least two heat dissipators for natural air convection dissipation of heat to the ambient air. The dissipators are located at opposite ends of the fuse 21 to 24, in particular ends that comprise the electrical contacts of the fuse. Even in high power applications like in railroad traction vehicles the dissipation power of such dissipators (in the region of 40 to 90 W) is sufficient. There is no need for liquid cooling. The dissipators may comprise a plurality of fins and may be formed of a metal block. The DGresistance of each of the fuses is preferably lower than 1.1 mΩ, in particular lower than 0.6 mΩ.

The arrangement 1, in particular the intermediate circuit 9, may comprise more elements and/or parts as shown in Fig. 1, e. g. an inductor in one of the direct current connection lines 13, 15.

According to an alternative arrangement the intermediate circuit 9 is connected to a direct current (DC) electric power network. In this case, the rectifier 7 is not necessary and is omitted. For example, the direct current connection line 13 is connected to the means 3, in particular via an inductor. The direct current connection line 15 may be connected to ground potential.

Some of the railroad power networks are operated with alternating currents having the small frequency of 16 2/3 Hz. Thus, the ratio of the energy stored in the capacitors 17 to 20 to the nominal power of the current rectifier 9 and of the current converter 11 is particularly high. In case of a defect, particularly high discharging currents from the capacitors 17 to 20 can be expected. The concept of the fuse 21 to 24, which is arranged directly in series to the capacitor 17 to 20, plays an important role in protection against failure. Otherwise, severe damages in the intermediate circuit 9 might occur.

Compared to the prior-art device, which is adapted to limit the current in case of an immediate discharge of a capacitor, the electrical losses due to the DC-resistance of the device can be reduced to about 5 %, i.e. by a factor of 20.

## Claims

1. An arrangement (1) for transferring electric power from a power source to an electric power consumer (5), in particular to a driving motor of a railroad vehicle,
wherein the arrangement comprises
• an input side for connecting the arrangement to the power source;
• a direct current intermediate circuit (9), wherein the intermediate circuit (9) comprises a first (13) and a second (15) direct current connection line, at least one of the first and the second direct current connection lines being connected to the input side; and
• a current converter (11) for inverting a direct current and for delivering alternating current power to the power consumer (5), wherein the current converter is connected to the first (13) and to the second (15) direct current connection line;
wherein at least one capacitor (17 to 20) is provided in the intermediate circuit (9), the capacitor having two opposite poles, wherein a first pole is connected to the first direct current connection line (13) and wherein the second pole is connected to the second direct current connection line (15); and
wherein at least one fuse (21 to 24) is provided which is connected in series to the capacitor or to at least one of the capacitors (17 to 20), so as to connect the first (13) and second (15) direct current connection lines via the capacitor (17 to 20);
**characterised in that**
the at least one fuse (21 to 24) is designed to clear at a short circuit voltage which is smaller than a capacitor voltage of the capacitor (17 to 20) which is connected in series to the fuse (21 to 24).

2. The arrangement of claim 1, wherein the fuse (21 to 24) is adapted and/or chosen to melt or bum through and thereby to interrupt the connection between the capacitor (17 to 20) and at least one of the direct current connection lines (13, 15), if the time-integral of the square of a current carried by at least a part of the connection exceeds a threshold value.

3. The arrangement of claim 2, wherein the threshold value corresponds to a current which may appear only in case of an immediate discharge of the capacitor (17 to 20) due to an electric short circuit in the arrangement or in the arrangement including any electrically connected parts.

4. The arrangement of one of claim 1 to 3, wherein the at least one fuse (21 to 24) is provided with at least two heat dissipators for natural air convection dissipation of heat to the ambient air and wherein the dissipators are located at opposite ends of the fuse (21 to 24).

5. The arrangement of one of claim 1 to 4, wherein the input side of the arrangement comprises an input current rectifier (7) for connecting the arrangement to the power source and for rectifying an alternating current from the power source and wherein the first and the second direct current connection lines being connected to the input current rectifier (7).

6. The arrangement of one of claim 1 to 5, wherein the at least one fuse (21 to 24) is a semiconductor fuse.

7. The arrangement of one of claim 1 to 6, wherein the electric power consumer is a a driving motor (5) of a railroad vehicle, wherein the power source is a power network and wherein the input side is connected to means (3), in particular a pantograph, for connecting the input side of the arrangement to the power network.

## Patentansprüche

1. Anordnung (1) zum Übertragen von elektrischer Leistung von einer Leistungsquelle zu einem elektrischen Leistungsverbraucher (5), insbesondere zu einem Antriebsmotor eines Schienenfahrzeugs, wobei die Anordnung aufweist:
- eine Eingangsseite zum Verbinden der Anordnung mit der Leistungsquelle,
- einen Gleichstrom-Zwischenkreis (9), wobei der Zwischenkreis (9) eine erste (13) und eine zweite (15) Gleichstrom-Verbindungsleitung aufweist, wobei zumindest eine der ersten und zweiten Gleichstrom-Verbindungsleitung mit der Eingangsseite verbunden ist, und
- einen Stromrichter (11) zum Umrichten eines Gleichstroms und zum Liefern einer Wechselstrom-Leistung zu dem Leistungsverbraucher (5), wobei der Stromrichter mit der ersten (13) und der zweiten (15) Gleichstrom-Verbindungsleitung verbunden ist,
wobei zumindest ein Kondensator (17 bis 20) in dem Zwischenkreis (9) vorgesehen ist, wobei der Kondensator zwei entgegen gesetzte Pole aufweist, wobei ein erster Pol mit der ersten Gleichstrom-Verbindungsleitung (13) verbunden ist und wobei der zweite Pol mit der zweiten Gleichstrom-Verbindungsleitung (15) verbunden ist, und
wobei zumindest eine Sicherung (21 bis 24), die in Reihe zu dem Kondensator oder zu zumindest einem der Kondensatoren (17 bis 20) geschaltet ist, so dass sie die erste (13) und zweite (15) Gleichstrom-Verbindungsleitung über den Kondensator (17 bis 20) verbindet,
**dadurch gekennzeichnet, dass**
die zumindest eine Sicherung (21 bis 24) ausgelegt ist, bei einer Kurzschlussspannung abzuschalten, die kleiner ist als eine Kondensatorspannung des Kondensators (17 bis 20), der in Reihe zu der Sicherung (21 bis 24) geschaltet ist

2. Anordnung nach Anspruch 1, wobei die Sicherung (21 bis 24) ausgestaltet und/oder ausgewählt ist zu schmelzen oder durchzubrennen und **dadurch** die Verbindung zwischen dem Kondensator (17 bis 20) und zumindest einer der Gleichstrom-Verbindungsleitungen (13, 15) zu unterbrechen, wenn das Zeitintegral des Quadrats eines Stroms, der von zumindest einem Teil der Verbindung geführt wird, einen Grenzwert überschreitet.

3. Anordnung nach Anspruch 2, wobei der Grenzwert einem Strom entspricht, der nur in dem Fall einer sofortigen Entladung des Kondensators (17 bis 20) infolge eines elektrischen Kurzschlusses in der Anordnung oder in der Anordnung einschließlich irgendwelcher elektrisch verbundener Teile auftreten kann.

4. Anordnung nach einem der Ansprüche 1 bis 3, wobei die zumindest eine Sicherung (21 bis 24) mit zumindest zwei Wärmedissipatoren zur Dissipation von Wärme durch natürliche Luftkonvektion auf die Umgebungsluft versehen ist und wobei die Dissipatoren an gegenüberliegenden Enden der Sicherung (21 bis 24) angeordnet sind.

5. Anordnung nach einem der Ansprüche 1 bis 4, wobei die Eingangsseite der Anordnung einen Eingangsstrom-Gleichrichter (7) aufweist, zum Verbinden der Anordnung mit der Leistungsquelle und zum Gleichrichten eines Wechselstroms aus der Leistungsquelle und wobei die erste und die zweite Gleichstrom-Verbindungsleitung mit dem Eingangsstrom-Gleichrichter (7) verbunden sind.

6. Anordnung nach einem der Ansprüche 1 bis 5, wobei die zumindest eine Sicherung (21 bis 24) eine Halbleitersicherung ist.

7. Anordnung nach einem der Ansprüche 1 bis 6, wobei der elektrische Leistungsverbraucher ein Antriebsmotor (5) eines Schienenfahrzeugs ist, wobei die Leistungsquelle ein Leistungsnetz ist und wobei die Eingangsseite mit den Mitteln (3), insbesondere einem Pantograph, zum Verbinden der Eingangsseite der Anordnung mit dem Leistungsnetz verbunden ist.

## Revendications

1. Agencement (1) destiné à transférer de la puissance électrique d'une source d'énergie vers un consommateur d'énergie électrique (5), en particulier vers un moteur d'entraînement d'un véhicule ferroviaire, dans lequel l'agencement comprend
un côté d'entrée pour connecter l'agencement à la source d'énergie ;
un circuit intermédiaire de courant direct (9), dans lequel le circuit intermédiaire (9) comprend une première (13) et une seconde (15) ligne de connexion de courant directe, au moins l'une des premières et secondes lignes de connexion de courant directes étant connectée au côté d'entrée ; et
un convertisseur de courant (11) pour inverser un courant direct et pour distribuer de la puissance de courant alternatif au consommateur d'énergie (5), dans lequel le convertisseur de courant est connecté à la première (13) et à la seconde (15) lignes de connexion de courant directes ;
dans lequel au moins un condensateur (17 à 20) est fourni dans le circuit intermédiaire (9), le condensateur ayant deux pôles opposés, dans lequel un premier pôle est connecté à la première ligne de connexion de courant directe (13) et dans lequel le second pôle est connecté à la seconde ligne de connexion de courant directe (15) ; et
dans lequel au moins un fusible (21 à 24) est fourni qui est connecté en série au condensateur ou à au moins l'un des condensateurs (17 à 20), de façon à connecter la première (13) et la seconde (15) lignes de connexion de courant directes via le condensateur (17 à 20) ; **caractérisé en ce que**
l'au moins un fusible (21 à 24) est conçu pour libérer un circuit de tension court qui est plus petit qu'un condensateur de tension du condensateur (17 à 20) qui est connecté en série au fusible (21 à 24).

2. Agencement selon la revendication 1, dans lequel le fusible (21 à 24) est adapté et/ou choisi pour fondre ou buter et ainsi pour interrompre la connexion entre le condensateur (17 à 20) et au moins l'une des lignes de connexion de courant directes (13, 15), si l'intégrale par rapport au temps du carré d'un courant transporté par au moins une partie de la connexion excède une valeur de seuil.

3. Agencement selon la revendication 2, dans lequel la valeur de seuil correspond à un courant qui peut apparaître seulement en cas de décharge immédiate du condensateur (17 à 20) due à un circuit électrique court dans l'agencement ou dans l'agencement comprenant n'importe quelles parties connectées électriquement.

4. Agencement selon l'une quelconque des revendications 1 à 3, dans lequel l'au moins un fusible (21 à 24) est fourni avec au moins deux dissipateurs thermiques pour la dissipation naturelle de la convection d'air de chaleur à l'air ambiant et dans lequel les dissipateurs sont situés aux extrémités opposées du fusible (21 à 24).

5. Agencement selon l'une quelconque des revendications 1 à 4, dans lequel le côté d'entrée de l'agencement comprend un redresseur de courant d'entrée (7) pour connecter l'agencement à la source d'énergie et pour rectifier un courant alternatif de la source d'énergie et dans lequel les premières et secondes lignes de connexion de courant directes sont connectées au redresseur de courant d'entrée (7).

6. Agencement selon l'une quelconque des revendications 1 à 5, dans lequel l'au moins un fusible (21 à 24) est un fusible semi-conducteur.

7. Agencement selon l'une quelconque des revendications 1 à 6, dans lequel le consommateur d'énergie électrique est un moteur d'entraînement (5) d'un véhicule ferroviaire, dans lequel la source d'énergie est un réseau d'énergie et dans lequel le côté d'entrée est connecté à des moyens (3), en particulier un pantographe, destinés à connecter le côté d'entrée de l'agencement au réseau d'énergie.
